# EUROPEAN PATENT APPLICATION

(11) **EP 1 804 254 A2**
(43) Date of publication of application: **04.07.2007**
(21) Application number: 06126925.4
(22) Date of filing: 21.12.2006
(51) Int. Cl.: G21C 5/02

(54) **Method and system for optimizing a refueling outage schedule**

(30) Priority: 27.12.2005 US 319142
(71) Applicant: General Electric Company, Schenectady, NY 12345 (US)
(72) Inventor: Jacobs, Douglas Mark, Marietta, VA 30064 (US); Chan, Ahdee Quan, Morgan Hill, CA 95037 (US); Woods, Gordon Matthew, Norfolk, VA 23508 (US)
(74) Representative: Illingworth-Law, William Illingworth

(57) **Abstract**

A method (300) for optimizing a nuclear reactor refueling outage schedule using a computer system (110) coupled to a database (120) is provided. The method includes, in one embodiment, inputting (302) into the computer system data relating to a current status of a nuclear reactor, with the reactor data including information related to current tooling, processes, and financial data; storing (304) the reactor data in the database; and inputting (306) into the computer system a proposed refueling outage schedule profile, with the outage schedule profile including critical path tasks and an estimated duration for each of the critical path tasks. The method further includes generating (308) a gap analysis by comparing the proposed refueling outage schedule profile to a predetermined refueling outage schedule profile, where the predetermined schedule profile represents an optimum schedule; and determining (310) the critical path tasks where adjustments to the task durations result in an optimized refueling outage schedule profile using the gap analysis.

## Description

### BACKGROUND OF THE INVENTION

This invention relates generally to nuclear reactors, and more particularly, to a method and system for optimizing a reactor refueling outage schedule.

A reactor pressure vessel (RPV) of a boiling water reactor (BWR) typically has a generally cylindrical shape and is closed at both ends, e.g., by a bottom head and a removable top head. A core assembly is contained within the RPV and includes the core support plate, fuel assemblies, control rod blades and a top guide. A core shroud typically surrounds the core assembly and is supported by a shroud support structure. Particularly, the shroud has a generally cylindrical shape and surrounds both the core plate and the top guide. There is a space or annulus located between the cylindrical reactor pressure vessel and the cylindrically shaped shroud.

Periodically, the reactor needs to be shut down to replace spent fuel assemblies and to reposition in the core those fuel assemblies that are at various stages of burn-up to balance the heat generated in the core. During the refueling outage other maintenance operations can also be performed on the reactor. The length of time of the outage effects the cost of operation of the reactor and effects the ability of the reactor owner to produce electricity to sell.

### BRIEF DESCRIPTION OF THE INVENTION

In one aspect, a method for optimizing a nuclear reactor refueling outage schedule using a computer system coupled to a database is provided. The method includes inputting into the computer system data relating to a current status of a nuclear reactor, with the reactor data including information related to current tooling, processes, and financial data; storing the reactor data in the database; and inputting into the computer system a proposed refueling outage schedule profile, with the outage schedule profile including critical path tasks and an estimated duration for each of the critical path tasks. The method further includes generating a gap analysis by comparing the proposed refueling outage schedule profile to a predetermined refueling outage schedule profile, where the predetermined schedule profile represents an optimum schedule; and determining the critical path tasks where adjustments to the task durations result in an optimized refueling outage schedule profile using the gap analysis.

In another aspect, a network based system for optimizing a nuclear reactor refueling outage schedule is provided. The system includes a user computer system comprising a browser, a centralized database, and a server system that is configured to be coupled to the user system and the database. The server system is further configured to receive, from a user, data relating to a current status of a nuclear reactor, where the reactor data including information related to current tooling, processes, and financial data, store the reactor data in the database, and receive, from a user, a proposed refueling outage schedule profile, with the outage schedule profile including critical path tasks and an estimated duration for each of the critical path tasks. The system is further configured to generate a gap analysis by comparing the proposed refueling outage schedule profile to a predetermined refueling outage schedule profile where the predetermined schedule profile represents an optimum schedule, and determine the critical path tasks where adjustments to the task durations result in an optimized refueling outage schedule profile using the gap analysis.

In another aspect, a computer program embodied on a computer readable medium for optimizing a nuclear reactor refueling outage schedule is provided. The program including a code segment that receives, from a user, data relating to a current status of a nuclear reactor, with the reactor data including information related to current tooling, processes, and financial data; stores the reactor data in a database; and receives, from a user, a proposed refueling outage schedule profile, the outage schedule profile including critical path tasks and an estimated duration for each of the critical path tasks. The code segment further generates a gap analysis by comparing the proposed refueling outage schedule profile to a predetermined refueling outage schedule profile where the predetermined schedule profile represents an optimum schedule, and determines the critical path tasks where adjustments to the task durations result in an optimized refueling outage schedule profile using the gap analysis.

### BRIEF DESCRIPTION OF THE DRAWINGS

Embodiments of the present invention will now be described, by way of example only, with reference to the accompanying drawings, in which:
Figure 1 is a sectional schematic illustration, with parts cut away, of a boiling water nuclear reactor.
Figure 2 is a simplified block diagram of a system for optimizing a nuclear reactor refueling outage schedule in accordance with one embodiment of the present invention.
Figure 3 is an expanded version block diagram of an example embodiment of a server architecture of the system shown in Figure 2.
Figure 4 shows a configuration of a database within the system shown in Figure 2.
Figure 5 is a schematic flow chart of a method for optimizing reactor refueling outage schedules in accordance with an embodiment of the present invention.

### DETAILED DESCRIPTION OF THE INVENTION

Example embodiments of methods and systems that facilitate optimizing a nuclear reactor refueling outage schedule are described below in detail. A technical effect of the systems and methods described herein include at least one of facilitating the optimization of a reactor outage schedule using a gap analysis comparison to a "best-in-class" outage schedule, facilitating a user to access outage schedule information, tools and techniques used to perform short outages over the Internet, and facilitate a user integrating task duration information into the user's outage schedules for optimized scheduling. The network based Refueling Outage Optimizer System (ROOS) permits users performing refueling operations in a nuclear reactor to analyze their outage schedules by comparing the durations of the critical path tasks to those of a best-in-class outage schedule and drive into various levels of detail as to how the best-in-class schedule performs these critical path tasks.

The ROOS facilitates the user in preparing a profile of their specific nuclear reactor plant. The profile can include such information as current tooling, current processes, and financial data associated with the specific plant. The ROOS includes a database that can supply historical reactor plant data of similar type reactor plants for comparison. The ROOS also permits the user to input his preliminary refueling outage schedule that includes critical path outage tasks durations. Specific notes and details relating to the critical path outage tasks can be inputted into the system.

The ROOS performs a gap analysis by comparing the user's proposed outage schedule critical path tasks durations with a best-in-class outage schedule stored in the database. Additional drill down gap analysis can also be performed by the user to identify the critical path tasks that most effect the outage schedule. Graphical outputs of the gap analysis can be supplied by the ROOS. Further, the ROOS permits the user to determine how the best-in-class reactor plant performs any specific critical path task that has been identified in the gap analysis as having an excessive task duration. Modifying the task procedure can lower the duration and facilitate shorter outage times.

In one embodiment, the system includes a computer program embodied on a computer readable medium implemented utilizing a suitable computer language, for example, Java® and/or Structured Query Language (SQL) with a client user interface front-end for administration and a web interface for standard user input and reports. (Java is a registered trademark of Sun Microsystems, Inc., Palo Alto, California). In an example embodiment, the system is web enabled and is run on a business-entity's intranet. In yet another embodiment, the system is fully accessed by individuals having an authorized access outside the firewall of the business-entity through the Internet. In a further example embodiment, the system is being run in a Windows® environment (Windows is a registered trademark of Microsoft Corporation, Redmond, Washington). The application is flexible and designed to run in various different environments without compromising any major functionality.

The systems and processes are not limited to the specific embodiments described herein. In addition, components of each system and each process can be practiced independent and separate from other components and processes described herein. Each component and process also can be used in combination with other assembly packages and processes.

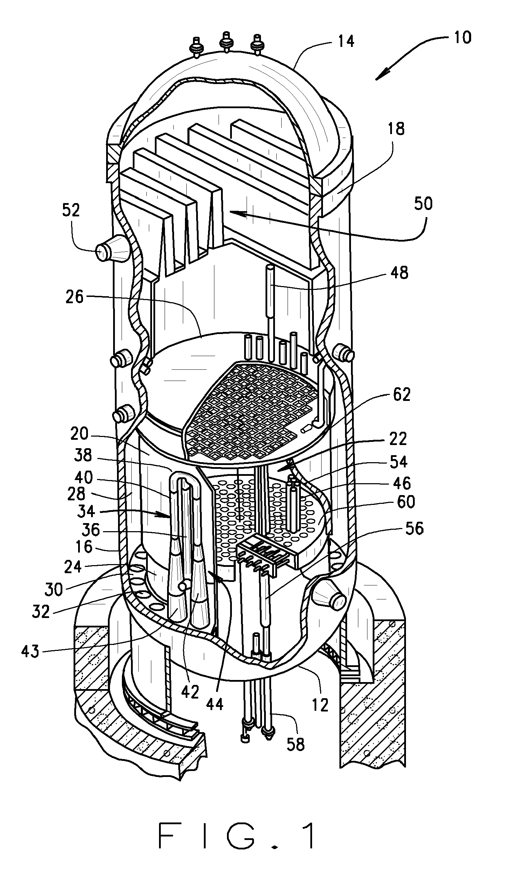

Referring to the drawings, Figure 1 is a sectional view, with parts cut away, of a boiling water nuclear reactor pressure vessel (RPV) 10. RPV 10 has a generally cylindrical shape and is closed at one end by a bottom head 12 and at its other end by a removable top head 14. A side-wall 16 extends from bottom head 12 to top head 14. Side-wall 16 includes a top flange 18. Top head 14 is attached to top flange 18. A cylindrically shaped core shroud 20 surrounds a reactor core 22. Shroud 20 is supported at one end by a shroud support 24 and includes a removable shroud head 26 at the other end. An annulus 28 is formed between shroud 20 and side-wall 16. A pump deck 30, which has a ring shape, extends between shroud support 24 and RPV side-wall 16. Pump deck 30 includes a plurality of circular openings 32, with each opening housing a jet pump 34. Jet pumps 34 are circumferentially distributed around core shroud 20. An inlet riser pipe 36 is coupled to two jet pumps 34 by a transition assembly 38. Each jet pump 34 includes an inlet mixer 40, a diffuser 42, and a tailpipe assembly 43. Inlet riser 36 and two connected jet pumps 34 form a jet pump assembly 44.

Thermal power is generated within core 22, which includes fuel assemblies 46 of fissionable material. Water circulated up through core 22 is at least partially converted to steam. Steam separators 48 separates steam from water, which is recirculated. Residual water is removed from the steam by steam dryers 50. The steam exits RPV 10 through a steam outlet 52 near vessel top head 14.

The amount of thermal power generated in core 22 is regulated by inserting and withdrawing control rods 54 of neutron absorbing material, such as for example, boron carbide. To the extent that control rod 54 is inserted into core 22 between fuel assemblies 46, it absorbs neutrons that would otherwise be available to promote the chain reaction which generates thermal power in core 22. Control rod guide tubes 56 maintain the vertical motion of control rods 54 during insertion and withdrawal. Control rod drives 58 effect the insertion and withdrawal of control rods 54. Control rod drives 58 extend through bottom head 12.

Fuel assemblies 46 are aligned by a core plate 60 located at the base of core 22. A top guide 62 aligns fuel bundles 46 as they are lowered into core 22. Core plate 60 and top guide 62 are supported by core shroud 20.

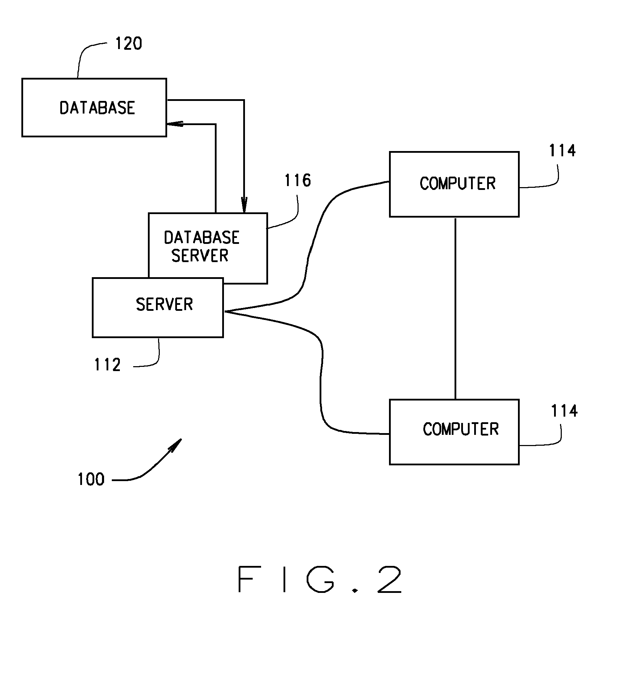

Figure 2 is a simplified block diagram of a network based system 110 for optimizing a nuclear reactor refueling outage schedule that includes a server system 112, and a plurality of user sub-systems, also referred to as client systems 114, connected to server system 112. In one embodiment, client systems 114 are computers including a web browser, such that server system 112 is accessible to client systems 114 via the Internet. Client systems 114 are interconnected to the Internet through many interfaces including a network, such as a local area network (LAN) or a wide area network (WAN), dial-in-connections, cable modems and special high-speed ISDN lines. Client systems 114 could be any device capable of interconnecting to the Internet including a web-based phone, personal digital assistant (PDA), or other web-based connectable equipment. A database server 116 is connected to a database 120 containing information on a variety of matters, as described below in greater detail. In one embodiment, centralized database 120 is stored on server system 112 and can be accessed by potential users at one of client systems 114 by logging onto server system 112 through one of client systems 114. In an alternative embodiment database 120 is stored remotely from server system 112 and may be non-centralized.

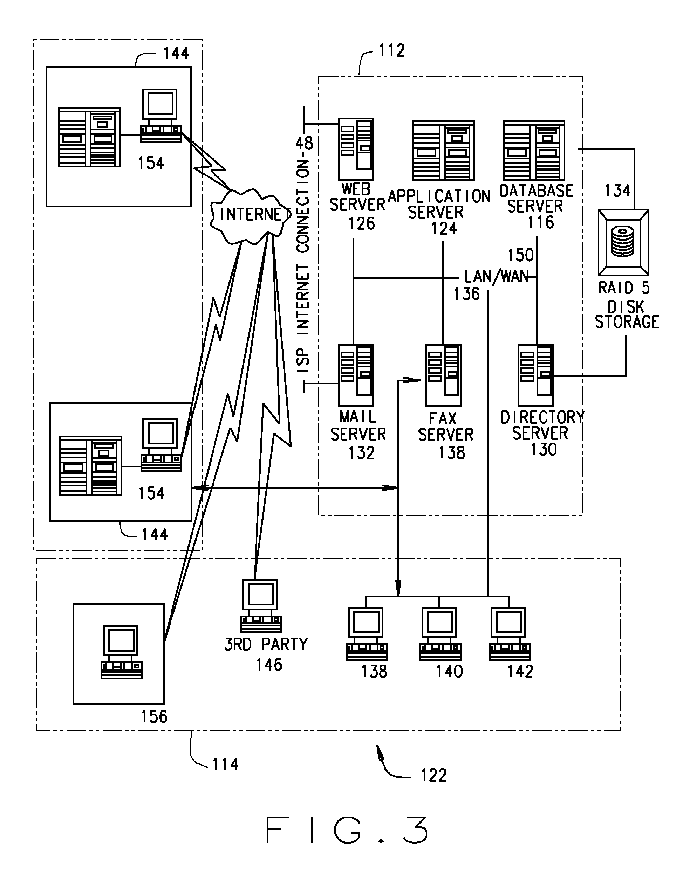

Figure 3 is an expanded version block diagram of an example embodiment of a server architecture of a system 122. Components in system 122, identical to components of system 110 (shown in Figure 2), are identified in Figure 3 using the same reference numerals as used in Figure 2. System 122 includes server system 112 and client systems 114. Server system 112 further includes database server 116, an application server 124, a web server 126, a fax server 128, a directory server 130, and a mail server 132. A disk storage unit 134 is coupled to database server 116 and directory server 130. Servers 116, 124, 126, 128, 130, and 132 are coupled in a local area network (LAN) 136. In addition, a system administrator's workstation 38, a user workstation 140, and a supervisor's workstation 142 are coupled to LAN 136. Alternatively, workstations 138, 140, and 142 are coupled to LAN 136 via an Internet link or are connected through an Intranet.

Each workstation, 138, 140, and 142 is a personal computer having a web browser. Although the functions performed at the workstations typically are illustrated as being performed at respective workstations 138, 140, and 142, such functions can be performed at one of many personal computers coupled to LAN 136. Workstations 138, 140, and 142 are illustrated as being associated with separate functions only to facilitate an understanding of the different types of functions that can be performed by individuals having access to LAN 136. In an example embodiment, client system 114 includes workstation 140 which can be used by an internal user or a designated outside user to review the refueling outage schedule profile.

Server system 112 is configured to be communicatively coupled to various individuals, including employees 144 and third parties, e.g., designated outside users, 146 via an ISP Internet connection 148. The communication in the example embodiment is illustrated as being performed via the Internet, however, any other wide area network (WAN) type communication can be utilized in other embodiments, i.e., the systems and processes are not limited to being practiced via the Internet. In addition, and rather than WAN 150, local area network 136 could be used in place of WAN 150.

In the example embodiment, any authorized individual having a workstation 154 can access system 122. At least one of the client systems includes a manager workstation 156 located at a remote location. Workstations 154 and 156 are personal computers having a web browser. Also, workstations 154 and 156 are configured to communicate with server system 112. Furthermore, fax server 128 communicates with remotely located client systems, including a client system 156 via a telephone link. Fax server 128 is configured to communicate with other client systems 138, 140, and 142 as well.

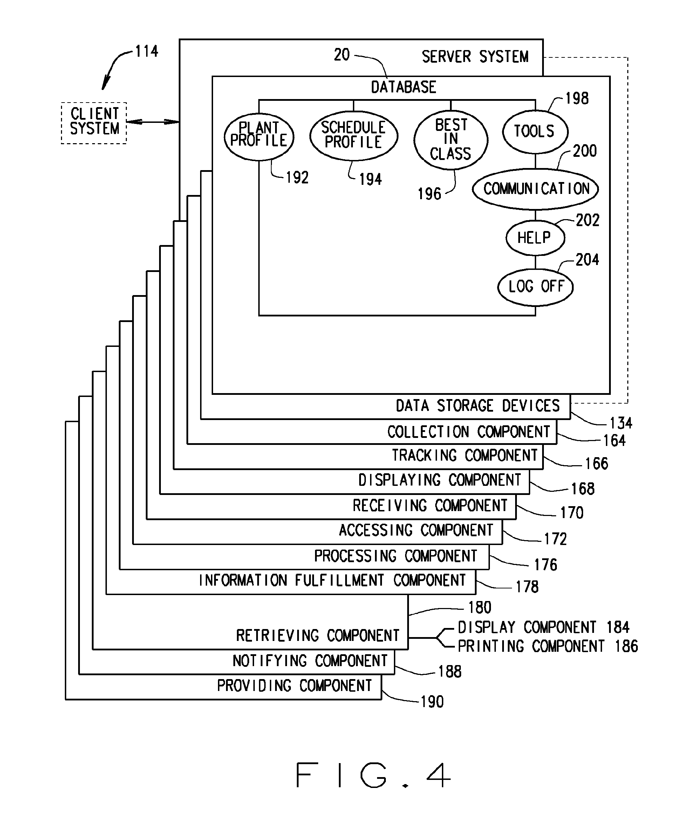

Figure 4 shows a configuration of database 120 within database server 116 of server system 112 shown in Figure 2. Database 120 is coupled to several separate computer software components within server system 112, which perform specific tasks. In the example embodiment, server system 112 includes a collection component 164 for collecting data from users in database 120, a tracking component 166 for tracking data, and a displaying component 168 to display information. Tracking component 166 tracks and cross-references data, including modifying existing data.

Server system 112 also includes a receiving component 170 to receive a specific query from client system 114, and an accessing component 172 to access data within data storage device 134. Receiving component 170 is programmed to receive a query from one of a plurality of users. Server system 112 further includes a processing component 176 for searching and processing received queries against database 120 containing a variety of information collected by collection component 164. An information fulfillment component 178 located in server system 112 enables the requested information to be downloaded to the plurality of users in response to the requests received by receiving component 170. Information fulfillment component 178 downloads the information after the information is retrieved from database 120 by a retrieving component 180. Retrieving component 180 retrieves, downloads and sends information to client system 114 based on a query received from client system 114.

Retrieving component 180 also includes a display component 184 that is configured to download information to be displayed on a client system's graphical user interface, and a printing component 186 that is configured to print information. Retrieving component 180 generates reports requested by the user through client system 114 in a pre-determined format. System 110 is flexible to provide other alternative types of reports and is not constrained to the options set forth above.

Server system 112 also includes a notifying component 188 and a providing component 190. Notifying component 188 electronically transmits a message to client system 114 based on information inputted into server system 112, notifying a user of the status of the gap analysis. Providing component 190 electronically provides a report to manager workstation 156 (shown in Fig. 3) summarizing the review of the gap analysis and, what type of action is recommended.

In one embodiment, collection component 164, tracking component 166, displaying component 168, receiving component 170, processing component 176, information fulfillment component 178, retrieving component 180, display component 184, printing component 186, notifying component 188, and providing component 190 are computer programs embodied on computer readable medium.

Database 120 is divided into an Reactor Plant Profile Section 192, a Schedule Profile Section 194, a Best In Class Section 196, a Tools Section 198, a Communication Section 200, a Help Section 202, and a Logoff Section 204.

Reactor Plant Profile Section 192 includes specific nuclear reactor plant data relating to the current status of the specific nuclear reactor. The reactor data includes information relating to current tooling, processes, and financial data regarding the nuclear reactor plant. Section 192 also includes generic historical data and historical data related to specific types of nuclear reactors. The historical data related to specific types of nuclear reactors includes information relating to tools and techniques used to perform optimized critical path tasks.

Schedule Profile Section 194 includes data relating to the proposed refueling outage schedule profile for a specific reactor that has been inputted by a user. The proposed outage schedule profile includes data on critical path tasks and an estimated duration for the critical path tasks. The proposed outage schedule profile can also include data on non-critical path tasks.

Best In Class Section 196 includes data relating to best in class outage schedule profiles for a plurality of nuclear reactor types. Each best in class outage schedule profile representing an optimum outage schedule for a specific nuclear reactor type. The best in class data also includes details of critical path processes to permit a user to determine how the specific best in class nuclear reactor plant performs a specific task.

Tools Section 198 enables the user to access information stored in database 120 and provides a user with links to other nuclear reactor resources.

Communication Section 200 enables the user to access information stored in database 120 and provides useful links to historical and current communications (e.g., e-mails, correspondence, memos, etc.) from users of similar nuclear reactor plant types..

Help Section 202 displays additional information links relating to System 110 (shown in Fig. 1). In the example embodiment, Help Section 202 includes a user guide link, a glossary of defined terms link, a frequently asked questions link, a quick reference card link, and a feedback link.

Logoff Section 204 permits a user to logoff of system 110 (shown in Fig. 1).

System 110 accumulates a variety of confidential data and has different access levels to control and monitor the security of and access to system 110. Authorization for access is assigned by system administrators on a need to know basis. In one embodiment, access is provided based on job functions. In yet another embodiment, system 110 provides access based on a business-entity. The administration/editing capabilities within system 110 are also restricted to ensure that only authorized individuals have access to modify or edit the data existing in the system. System 110 manages and controls access to system data and information.

The architectures of system 110 as well as various components of system 110 are exemplary only. Other architectures are possible and can be utilized in connection with practicing the processes described below.

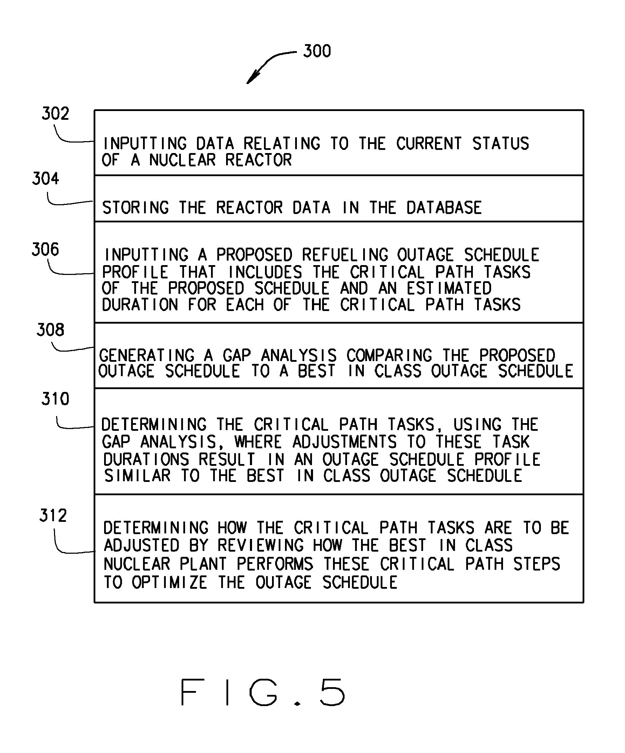

Figure 5 is a flow chart of a method 300 for optimizing reactor refueling outage schedules in accordance with an embodiment of the present invention. Method 300 includes the steps of inputting 302, into system 110, data relating to the current status of a nuclear reactor, and storing 304 the reactor data in database 120. The reactor data includes information relating to current tooling, current processes, and financial data regarding the nuclear reactor plant.

Method 300 also includes the step of inputting 306, into system 110, a proposed refueling outage schedule profile that includes the critical path tasks of the proposed schedule and an estimated duration for each of the critical path tasks. In another embodiment, the non-critical path task durations are also included.

Method 300 further includes the step of generating 308 a gap analysis comparing the proposed outage schedule to a best in class outage schedule. Particularly, the critical path tasks of the proposed schedule are compared to the critical path tasks of the best in class outage schedule. In other embodiments, the non-critical path tasks are also compared to the best in class schedule. Also, a graphical representation of the gap analysis can be displayed by system 110.

Method 300 also includes the step of determining 310 the critical path tasks, using the gap analysis, where adjustments to these task durations result in an outage schedule profile similar to the best in class outage schedule. Further, method 300 includes the steps of determining 312 how the critical path tasks are to be adjusted by reviewing how the best in class nuclear plant performs these critical path steps to optimize the outage schedule and providing technical information and descriptions of the optimized critical paths of the specific best in class reactor types.

The above described methods and systems provides a user friendly, web based system that permits users to easily perform gap analysis comparing their refueling outage schedule with a best in class outage schedule of a similar reactor type plant. Also the above described methods and systems permit the user to access schedule information, along with tools and techniques to perform shorter refueling outages by permitting the user to integrate task duration information into the user's schedule to optimize the user's schedule.

While the invention has been described in terms of various specific embodiments, those skilled in the art will recognize that the invention can be practiced with modification within the spirit and scope of the claims.

## Claims

1. A method (300) for optimizing a nuclear reactor refueling outage schedule using a computer system (110) coupled to a database (120), said method comprising:
inputting (302) into the computer system data relating to a current status of a nuclear reactor, the reactor data including information related to current tooling, processes, and financial data;
storing (304) the reactor data in the database;
inputting (306) into the computer system a proposed refueling outage schedule profile, the outage schedule profile including critical path tasks and an estimated duration for each of the critical path tasks;
generating (308) a gap analysis by comparing the proposed refueling outage schedule profile to a predetermined refueling outage schedule profile wherein the predetermined schedule profile represents an optimum schedule; and
determining (310) the critical path tasks where adjustments to the task durations result in an optimized refueling outage schedule profile using the gap analysis.

2. A method (300) in accordance with Claim 1 wherein determining (310) the critical path tasks further comprises determining (312) how the critical path tasks are adjusted to optimize the refueling outage schedule profile.

3. A method (300) in accordance with Claim 1 wherein the database (120) includes generic historical reactor data and historical reactor data related to a specific type of reactor.

4. A method (300) in accordance with Claim 1 wherein the historical reactor data related to a specific type of reactor comprises information relating to tools and techniques used to perform optimized critical path tasks.

5. A method (300) in accordance with Claim 1 further comprising displaying a graphical representation of the gap analysis.

6. A method (300) in accordance with Claim 1 further comprising providing technical descriptions of the optimized critical path tasks for specific reactor types.

7. A network based system (110) for optimizing a nuclear reactor refueling outage schedule, said system comprising:
a user computer system (114) comprising a browser;
a centralized database (120); and
a server system (112) configured to be coupled to said user system and said database, said server system further configured to:
receive, from a user, data relating to a current status of a nuclear reactor, the reactor data including information related to current tooling, processes, and financial data;
store the reactor data in the database;
receive, from a user, a proposed refueling outage schedule profile, the outage schedule profile including critical path tasks and an estimated duration for each of the critical path tasks;
generate a gap analysis by comparing the proposed refueling outage schedule profile to a predetermined refueling outage schedule profile wherein the predetermined schedule profile represents an optimum schedule; and
determine the critical path tasks where adjustments to the task durations result in an optimized refueling outage schedule profile using the gap analysis.

8. A system (110) in accordance with Claim 7 wherein said server system (112) is further configured to determine how the critical path tasks are adjusted to optimize the refueling outage schedule profile.

9. A system (110) in accordance with Claim 7 wherein said database (120) includes generic historical reactor data and historical reactor data related to a specific type of reactor, wherein said historical reactor data related to a specific type of reactor comprises information relating to tools and techniques used to perform optimized critical path tasks.

10. A system (110) in accordance with Claim 7 wherein said server system (112) is further configured to provide technical descriptions of the optimized critical path tasks for specific reactor types.
